# EUROPEAN PATENT APPLICATION

(11) **EP 4 353 555 A1**
(43) Date of publication of application: **17.04.2024**
(21) Application number: 22820058.0
(22) Date of filing: 26.05.2022
(51) Int. Cl.: B60W 20/20, B60K 6/442, B60W 10/06, B60W 10/08, B60L 50/16, B60L 50/60, B60L 58/13, B60L 53/14

(54) **VEHICLE CONTROL DEVICE**

(30) Priority: 08.06.2021 JP 2021095806
(71) Applicant: Mitsubishi Jidosha Kogyo Kabushiki Kaisha, Tokyo 108-8410 (JP)
(72) Inventor: SHIINO, Akihiro, Tokyo 108-8410 (JP); SHIMIZU, Ryo, Tokyo 108-8410 (JP); IKOMA, Norihiko, Tokyo 108-8410 (JP)
(74) Representative: Vossius & Partner Patentanwälte Rechtsanwälte mbB
(86) International application number: PCT/JP2022/021532
(87) International publication number: WO 2022/259876

(57) **Abstract**

A vehicle control device for a hybrid vehicle includes: an engine and an electric motor; a transaxle including a power transmission path connecting the engine and the electric motor with a driving wheel; a temperature detection unit configured to detect a temperature of the transaxle; and a control unit configured to switch between a series operation mode in which the electric motor is driven for traveling by electric power generated by rotation of the engine and a parallel operation mode in which the engine and the electric motor are driven for traveling. When the temperature of the transaxle is equal to or higher than a first predetermined temperature, the control unit performs a first control of giving priority to the traveling in the parallel operation mode.

## Description

### TECHNICAL FIELD

The present invention relates to a vehicle control device for a hybrid vehicle.

### BACKGROUND ART

A hybrid vehicle that uses both an engine and a motor to drive the vehicle is widely used. The hybrid vehicle includes the engine (internal combustion engine) and the motor (electric motor), and is configured to assist driving of the engine by the motor during traveling, and regenerate electric power during deceleration.

There are various types of hybrid vehicles, and for example, a hybrid vehicle called a mild hybrid type vehicle implements a function of traveling only by an engine according to a traveling state of the vehicle, a function of performing regenerative electric power generation, a function of assisting a driving force of the engine by a driving force generated by a motor, etc. In addition, in a hybrid vehicle called a strong hybrid type vehicle, in addition to the above functions, a function of traveling only by the motor is added. In a transaxle that constitutes a powertrain of such a hybrid vehicle, various devices such as a speed reducer that adjusts a torque and a rotation speed transmitted to a driving wheel, a clutch that switches a driving state, and a clutch driving device for driving the clutch are provided. In addition, Patent Literatures 1 and 2 disclose techniques for preventing a temperature inside the transaxle from excessively rising.

A hybrid vehicle described in Patent Literature 1 includes two motor generators including a first motor generator and a second motor generator, and a mode in which both the first motor generator and the second motor generator are driven for traveling and a mode in which only the second motor generator is driven for traveling can be selected. A planetary gear mechanism is interposed on a power transmission path leading from an engine and the first motor generator to a driving wheel.

Further, when both motor generators are driven, a driving force share ratio of each motor generator with respect to a required driving force is set such that a temperature rise of the planetary gear mechanism can be prevented. Specifically, when a temperature of a pinion gear of the planetary gear mechanism is higher than a predetermined temperature, the driving force share ratio is set such that the driving force share ratio of the first motor generator is lower than that when the temperature of the pinion gear is equal to or lower than the predetermined temperature. It is said that accordingly, a temperature rise of the pinion gear is prevented, and a situation in which the mode in which both the first motor generator and the second motor generator are driven is restricted can be prevented.

In addition, a hybrid vehicle described in Patent Literature 2 includes a first rotating machine and a second rotating machine as power sources in addition to an engine, and further includes a first clutch and a second clutch on a power transmission path. A planetary gear mechanism is interposed on the power transmission path leading from the engine and the first rotating machine to a driving wheel. The first clutch is disposed between the power transmission path and the second rotating machine. The second clutch is a one-way clutch disposed in parallel with the first clutch. The second rotating machine transmits power to and from the power transmission path via at least one of the first clutch and the second clutch.

Further, in a predetermined traveling mode in which rotation of the second rotating machine is stopped and the vehicle is caused to travel forward, the first clutch is in a disengaged state. It is said that since the first clutch is disengaged and the second rotating machine is separated from the power transmission path, rotation of the second rotating machine along with rotation of the power transmission path is prevented, and a drag loss or a mechanical loss in the second rotating machine is reduced, and as a result, output of the engine can be reduced. In addition, a control unit included in this hybrid vehicle has a function of limiting an operation range in which the predetermined traveling mode is permitted when an oil temperature is low compared with when the oil temperature is high. Specifically, when the oil temperature is lower than a predetermined temperature, the predetermined traveling mode is prohibited, and an oil is heated by heat generated by the second rotating machine, and thus a rise in oil temperature at an early stage can be achieved.

### CITATION LIST

### PATENT LITERATURE

Patent Literature 1: JP2017-149210A
Patent Literature 2: JP2015-131512A

### SUMMARY OF INVENTION

### TECHNICAL PROBLEM

Incidentally, a temperature of a transaxle tends to rise more than before due to an increase in vehicle weight of a hybrid vehicle, an increase in output required for traveling, an increase in maximum rotation speed of an engine and the like in recent years. In addition, when operation is continued for a long time under a harsh environment that is not a general usage environment, an unexpected temperature rise of the transaxle is also contemplated. If the temperature of the transaxle exceeds an allowable temperature and the condition is continued for a long time, this is not preferable because oil deterioration progresses, loads on gears or bearings and the like are increased, and curing of a resin part such as an oil seal is accelerated. Therefore, there is a demand to prevent the temperature rise of the transaxle as much as possible.

In addition, in particular, in a hybrid vehicle including both a series operation mode in which an engine is used for electric power generation and a motor is driven for traveling by the generated electric power and a parallel operation mode in which the motor supports and drives the engine at the time of starting or accelerating and the like, at which the most energy is used, in order to prevent the temperature rise of the transaxle, the problem is how to properly use each operation mode.

In this regard, in Patent Literature 1, when the temperature of the pinion gear of the planetary gear mechanism is high, the driving force share ratio of the first motor generator is reduced, but Patent Literature 1 does not disclose how to properly use the series operation mode and the parallel operation mode in terms of temperature control. In addition, an object of Patent Literature 1 is to reduce a possibility that traveling is restricted by both the first motor generator and the second motor generator, and this technique does not contribute to preventing the temperature rise of the transaxle. Further, in Patent Literature 2, when the oil temperature is low, the traveling mode is restricted more than when the oil temperature is high, and this technique does not contribute to preventing the temperature rise of the transaxle, either.

Accordingly, a problem to be solved by the present invention is to prevent a temperature rise of a transaxle in a hybrid vehicle.

### SOLUTION TO PROBLEM

In order to solve the above problem, the present invention employs a vehicle control device for a hybrid vehicle, including: an engine and an electric motor; a transaxle including a power transmission path connecting the engine and the electric motor with a driving wheel; a temperature detection unit configured to detect a temperature of the transaxle; and a control unit configured to switch between a series operation mode in which the electric motor is driven for traveling by electric power generated by rotation of the engine and a parallel operation mode in which the engine and the electric motor are driven for traveling, in which when the temperature of the transaxle is equal to or higher than a first predetermined temperature, the control unit performs a first control of giving priority to the traveling in the parallel operation mode.

Here, a configuration in which a secondary battery configured to supply electric power to the electric motor is included, and when a state of charge of the secondary battery decreases to be smaller than a first predetermined value due to traveling in the parallel operation mode after the first control, a second control of shifting to the series operation mode is performed can be employed.

In addition, a configuration in which when the state of charge of the secondary battery recovers to be equal to or larger than a second predetermined value, which is set to a value larger than the first predetermined value, due to the traveling in the series operation mode after the second control, a third control of shifting to the parallel operation mode is performed can be employed.

In each of these aspects, a configuration in which when the temperature of the transaxle is equal to or higher than a second predetermined temperature which is set to a temperature higher than the first predetermined temperature, a fourth control of limiting a driving torque, an engine output, or an engine rotation speed is performed can be employed.

It should be noted that a configuration in which the hybrid vehicle is a plug-in hybrid car, and the plug-in hybrid car has a function of supplying the electric power from the secondary battery to an outside can be employed.

### ADVANTAGEOUS EFFECTS OF INVENTION

According to the present invention, since traveling in a parallel operation mode is facilitated when a temperature of a transaxle is equal to or higher than a first predetermined temperature, a temperature rise of the transaxle can be effectively prevented.

### BRIEF DESCRIPTION OF DRAWINGS

Fig. 1 is a schematic diagram of a vehicle showing an embodiment of the present invention;
Fig. 2 is a graph diagram showing examples of controls;
Fig. 3 is a flowchart showing an example of controls;
Fig. 4 is a flowchart showing examples of controls; and
Fig. 5 is a flowchart showing an example of controls.

### DESCRIPTION OF EMBODIMENTS

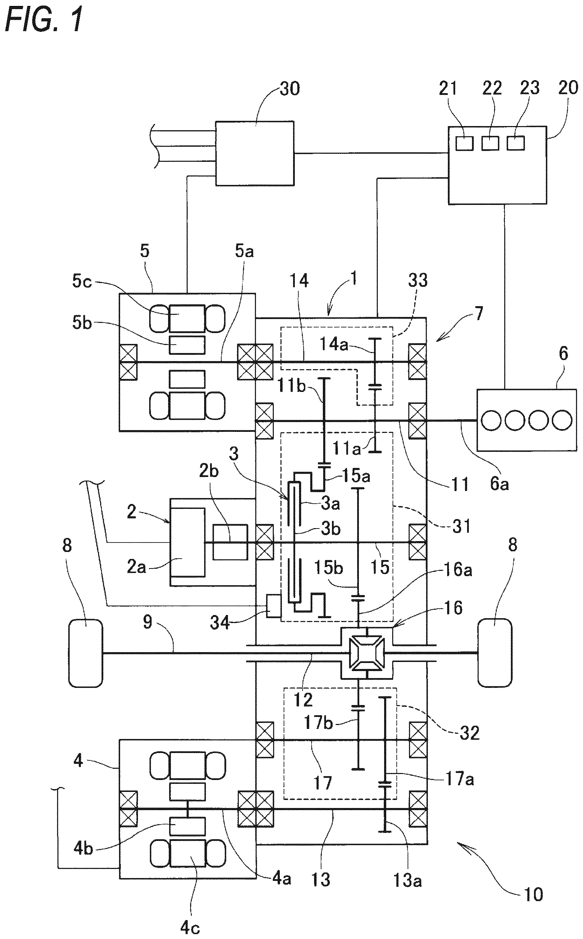

An embodiment of the present invention will be described with reference to the drawings. A vehicle 10 equipped with a vehicle control device according to the present invention is a strong hybrid type vehicle that travels with an engine (internal combustion engine) 6 and a motor (electric motor) 4 as driving sources, as shown in Fig. 1. In the embodiment, the vehicle 10 is an FF-type plug-in hybrid car with a front wheel as a driving wheel 8.

The vehicle 10 includes a powertrain (power transmission path) 7 that separately connects the front wheel, which is the driving wheel 8, with the engine 6 and the motor 4. The power transmission path 7 is provided with a clutch 3 that switches a driving state, a hydraulic pump 2 for driving the clutch 3, a speed reducer that adjusts a torque and a rotation speed transmitted to the driving wheel 8, and the like, which constitute a transaxle 1. Driving forces of the engine 6 and the motor 4 are transmitted to the driving wheel 8 via the transaxle 1, causing the vehicle 10 to travel. In addition, the vehicle 10 includes a generator (electric generator) 5.

As the engine 6, a gasoline engine using gasoline as a fuel or a diesel engine using a light oil as a fuel can be employed. A crankshaft 6a is rotated by combustion of a fuel, and the rotation is transmitted to an input shaft 11.

The motor 4 includes a rotor 4b that rotates integrally with a rotating shaft 4a, and a stator 4c that is fixed to a casing on an outer circumference of the rotor 4b. The rotating shaft 4a is rotated together with the rotor 4b by electric power stored in a battery 30. As the battery 30, for example, a secondary battery such as a lithium ion battery or a nickel metal hydride battery can be employed. Hereinafter, the battery 30 will be referred to as a secondary battery 30. An inverter that converts a direct current supplied from the secondary battery 30 into an alternating current is disposed adjacent to the motor 4. A rotation speed of the motor 4 can be adjusted by controlling the inverter.

The generator 5 is an electric motor that functions as a starter of the engine 6 and is also an electric generator that generates electric power by rotation of the engine 6 or the driving wheel 8, and is also referred to as a motor generator. The generator 5 includes a rotor 5b that rotates integrally with a rotating shaft 5a, and a stator 5c that is fixed to a casing on an outer circumference of the rotor 5b. The electric power generated by the generator 5 is charged to the secondary battery 30 (driving battery), which is an electric power supply source for the motor 4, and is directly supplied to the motor 4 according to operation conditions. In addition, starting of the engine 6 by the generator 5 is performed by electric power supplied from the secondary battery 30 (low voltage battery).

The transaxle 1 functions as a power transmission path between the engine 6 or the motor 4 as a driving source and a drive shaft 9 connected to the driving wheel 8. In addition, the transaxle 1 includes a transmission (speed reducer) (not shown), a final drive (final speed reducer) including a differential device 16 including a differential gear 16a, and the like in the middle of the power transmission path thereof. As shown in Fig. 1, in the embodiment, three power transmission paths including a first path 31, a second path 32, and a third path 33 are set inside the transaxle 1.

The first path 31 (first power transmission mechanism) connects the crankshaft 6a of the engine 6 and the drive shaft 9. The clutch 3 that turns power transmission on and off is disposed at any position on the first path 31. As the clutch 3, for example, a multi-plate clutch can be employed. A driving-side engagement element 3a to which the driving force from the engine 6 is input, and a driven-side engagement element 3b that outputs a driving force to a driving wheel 8 side are provided inside the clutch 3. The driving-side engagement element 3a and the driven-side engagement element 3b are controlled to approach (engage) and separate (disengage) from each other by hydraulic pressure supplied from the pump 2.

The second path 32 (second power transmission mechanism) connects the rotating shaft 4a of the motor 4 and the drive shaft 9. The motor 4 can assist the driving force of the engine 6 according to an operation state, and the vehicle 10 can travel only by the driving force of the motor 4. For example, when the vehicle 10 is started or travels at a low speed, an electric operation mode (series operation mode) in which the vehicle 10 travels only by the driving force of the motor 4 without using the driving force of the engine 6 is set. In addition, when a traveling speed of the vehicle 10 is equal to or higher than a predetermined vehicle speed, according to the operation state, an assist operation mode (parallel operation mode) in which the driving force of the motor 4 is added to the driving force of the engine 6 is set or an engine operation mode in which driving by the motor 4 is stopped and traveling is performed only by the driving force of the engine 6.

The third path 33 (third power transmission path) connects the crankshaft 6a of the engine 6 and the rotating shaft 5a of the generator 5. Rotation from the driving wheel 8 side or rotation from an engine 6 side is input to the generator 5 via the third path 33, and electric power is generated by the input of the rotation. Hereinafter, a rotating shaft in the transaxle 1 connected to the crankshaft 6a will be referred to as the input shaft 11. In addition, the rotating shafts in the transaxle 1 respectively connected to the drive shaft 9, the rotating shaft 4a of the motor 4, and the rotating shaft 5a of the generator 5 will be referred to as an output shaft 12, a motor shaft 13, and a generator shaft 14, respectively. Further, a rotation center shaft of the clutch 3 disposed in the transaxle 1 will be referred to as a clutch shaft 15, a rotation center shaft of the pump 2 will be referred to as a pump shaft 2b, and a counter shaft disposed parallel to the output shaft 12 will be referred to as a counter shaft 17.

As shown in Fig. 1, a first gear 11a and a second gear 11b are provided on the input shaft 11 in parallel in an axial direction. The first gear 11a meshes with a third gear 14a fixed to the generator shaft 14 to transmit power to the generator shaft 14. The second gear 11b meshes with a fourth gear 15a connected to the driving-side engagement element 3a of the clutch 3. The driven-side engagement element 3b disposed to face the driving-side engagement element 3a is fixed to the clutch shaft 15. The clutch shaft 15 is also provided with a fifth gear 15b that transmits a driving force to an output shaft 12 side. The fifth gear 15b meshes with the differential gear 16a fixed to the output shaft 12.

The pump shaft 2b is connected to one end of the clutch shaft 15. The pump shaft 2b is connected to a driver 2a built in the pump 2. The pump 2 in the embodiment is a vane pump, and the driver 2a corresponds to a rotor. The pump 2 is not limited to that in the embodiment, and a piston pump or a gear pump other than above may be employed. The driver 2a generates hydraulic pressure by using a driving force (rotation on the driving wheel 8 side) transmitted from a clutch shaft 15 side, and pumps an hydraulic oil to a hydraulic circuit. The hydraulic pressure is transmitted to the clutch 3 and used as a pressure to bring the driving-side engagement element 3a and the driven-side engagement element 3b closer to each other for engagement. That is, when the traveling speed of the vehicle 10 is equal to or higher than the predetermined vehicle speed and the hydraulic pressure generated by the pump 2 is increased sufficiently to engage the driving-side engagement element 3a and the driven-side engagement element 3b, the clutch 3 is in a connection state. When the clutch 3 is in the connection state, the driving force of the engine 6 is transmitted to the driving wheel 8 via the first path 31. In this case, if the engine 6 is not operating, the engine 6 is appropriately started. If the traveling speed of the vehicle 10 is lower than the predetermined vehicle speed, a control is performed to disengage the clutch 3 and stop the engine 6.

A sixth gear 13a is provided on the motor shaft 13, and a seventh gear 17a and an eighth gear 17b are provided on the counter shaft 17 in parallel in the axial direction. The sixth gear 13a meshes with the seventh gear 17a of the counter shaft 17, and the eighth gear 17b meshes with the differential gear 16a fixed to the output shaft 12. Therefore, the driving force of the motor 4 is transmitted to the driving wheel 8 via the second path 32.

It should be noted that the engine 6, the clutch 3, the motor 4, the generator 5, and devices of other units are controlled by a control unit 21 included in an electronic control unit 20 mounted on the vehicle 10. In addition, the electronic control unit 20 includes a state-of-charge detection unit 22 that calculates, based on a voltage and the like of a battery module, a state of charge of the secondary battery 30, that is, a ratio of a remaining capacity to a full capacity of electric power that can be stored by the secondary battery 30 (remaining capacity/full capacity). Hereinafter, a state of charge of the driving battery among a plurality of secondary batteries 30 will be particularly referred to as state of charge (SOC).

The vehicle 10 includes a temperature detection unit 34 that detects a temperature of the transaxle 1. In the embodiment, a temperature sensor is employed as the temperature detection unit 34 to detect a temperature of a hydraulic oil or a lubricating oil in the transaxle 1 and the detected temperature is used as the temperature of the transaxle 1. Hereinafter, the temperature of the transaxle 1 detected by the temperature detection unit 34 will be referred to as a T/A temperature.

The control unit 21 of the electronic control unit 20 performs a control to switch between the series operation mode in which the motor 4 is driven for traveling by the electric power generated by rotation of the engine 6 and the parallel operation mode in which traveling is performed by drive of both the engine 6 and the motor 4. In addition, in a case where the SOC is smaller than a predetermined value, or the like, a control to select the engine operation mode in which traveling is performed only by the drive of the engine 6 is also performed. In the series operation mode, a driving force is transmitted from the motor 4 to the driving wheel 8 through the second path 32. In the parallel operation mode, a driving force is transmitted from the engine 6 to the driving wheel 8 through the first path 31 and a driving force is transmitted from the motor 4 to the driving wheel 8 through the second path 32.

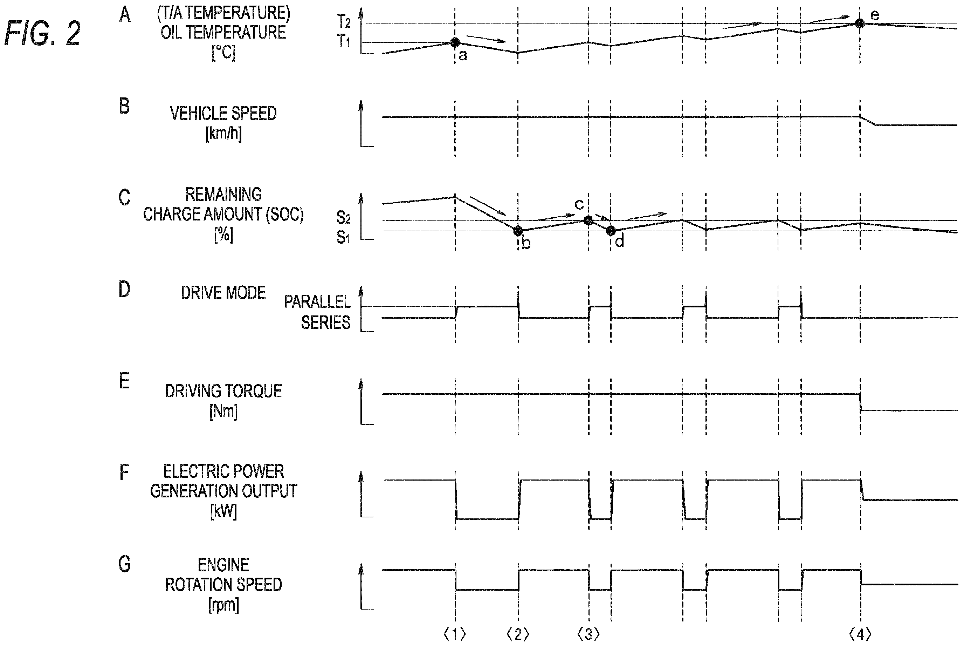

Information on the T/A temperature detected by the temperature detection unit 34 is sent to a temperature information reception unit 23 of the electronic control unit 20. When the temperature of the transaxle 1 is equal to or higher than a first predetermined temperature T1, the control unit 21 performs a first control of giving priority to traveling in the parallel operation mode. In the first control, for example, as indicated by symbol a in graph A of Fig. 2, when the T/A temperature (an oil temperature is indicated by [°C] in the graph A of Fig. 2) is equal to or higher than the first predetermined temperature T1 (set to T1 = 125°C in the embodiment), even if traveling is performed in the series operation mode up to that time point, a control to shift (transition) to the parallel operation mode is performed. If traveling is performed in the parallel operation mode up to that time point, a control to continue the parallel operation mode is performed. That is, in the first control, the parallel operation mode is promoted (prioritized). It should be noted that horizontal axes of respective graph diagrams shown in Fig. 2 indicate and respectively correspond to times.

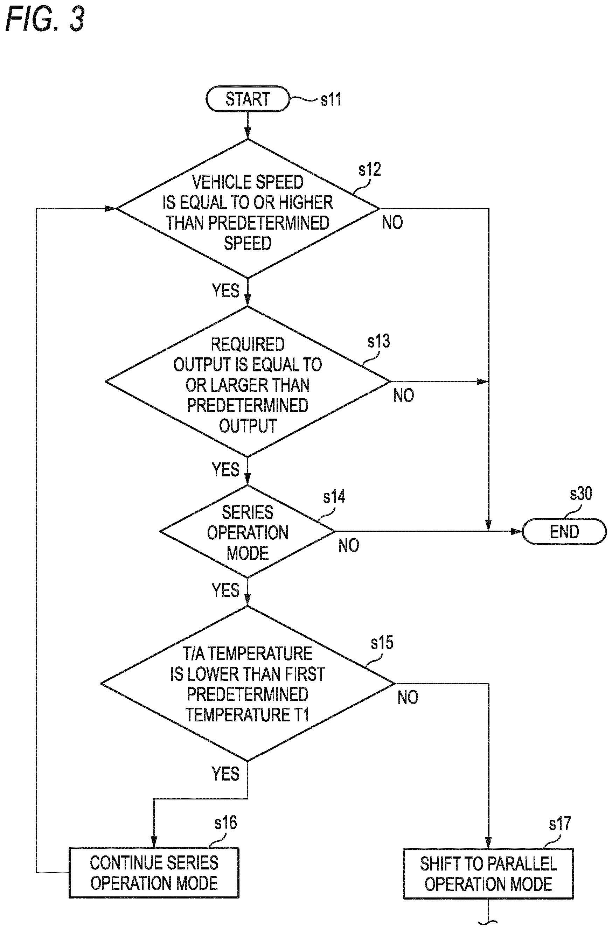

A flow of the first control is shown in Fig. 3. The control is started in step s11, and a vehicle speed is determined in step s12. When the vehicle speed is equal to or higher than a predetermined speed (Yes in s12), the flow proceeds to step s13, and when the vehicle speed is lower than the predetermined speed (No in s12), there is little concern that the T/A temperature will excessively rise, which is excluded from the target of the control, and thus the flow proceeds to step s30 and ends the control. Subsequently, a required output (required torque) is determined in step s13. When the required output is equal to or larger than a predetermined output (Yes in s13), the flow proceeds to step s14, and when the required output is smaller than the predetermined output (No in s13), there is little concern that the T/A temperature will excessively rise, which is excluded from the target of the control, and thus the control is similarly ended. An operation mode is determined in step s14. When the operation mode is the series operation mode (Yes in s14), the flow proceeds to step s15, and when the operation mode is not the series operation mode (No in s14), the control is similarly ended. The T/A temperature is determined in step s15. When the T/A temperature is lower than the first predetermined temperature T1 (Yes in s15), the flow proceeds to step s16, the series operation mode is continued, and the flow returns to step s12. When the T/A temperature is equal to or higher than the first predetermined temperature T1 (No in s15), the flow proceeds to step s17 to shift to the parallel operation mode.

By shifting to the parallel operation mode, a load on the motor 4 is reduced and the T/A temperature is lowered. This is because, compared with traveling in the series operation mode, in the traveling in the parallel operation mode, an output of the motor 4 and a rotation speed of the engine 6 are lower, and a rotation speed difference in the clutch 3 is smaller, and thus the T/A temperature is less likely to rise. Accordingly, the vehicle 10 can continue traveling without sacrificing a vehicle speed and a driving torque of the vehicle 10 (see graphs B and E in Fig. 2) while a temperature rise of the transaxle 1 is prevented. That is, in the first control, when the T/A temperature is equal to or higher than the first predetermined temperature, the traveling in the parallel operation mode is facilitated to prevent the T/A temperature from rising. It should be noted that in this case, an electric power generation output and an engine rotation speed are changed (see points <1> in graph diagrams F and G of Fig. 2), which, however, is due to the shift to the parallel operation mode, and does not affect the vehicle speed and the driving torque.

If the traveling in the parallel operation mode is continued after the first control is performed, the SOC, which is an index of the state of charge of the secondary battery 30 (indicated by a remaining charge amount [%] in graph C of Fig. 2), gradually decreases. A state in which the SOC is decreased is indicated by a rightwardly descending arrow toward a point b in the graph diagram C of Fig. 2. When the SOC decreases to be smaller than a preset first predetermined value S 1, a second control of shifting to the series operation mode is performed. That is, when the SOC falls below the first predetermined value S 1 due to the traveling in the parallel operation mode, the parallel operation mode is prohibited and is shifted to the series operation mode. The first predetermined value S 1 can be set to a numerical value such as 10%, 20%, and 30% according to a vehicle type and the operation conditions. It should be noted that similarly, in this case, the electric power generation output and the engine rotation speed are changed (see points <2> in the graph diagrams F and G of Fig. 2), which, however, is due to the shift to the series operation mode, and does not affect the vehicle speed and the driving torque.

Next, if the traveling in the series operation mode is continued after the second control is performed, the SOC of the secondary battery 30 is recovered. A state in which the SOC is increased is indicated by a rightwardly ascending arrow toward a point c in the graph diagram C of Fig. 2. Then, when the SOC recovers to be equal to or larger than a second predetermined value S2, which is set to a value larger than the first predetermined value S 1, in order to restart the control of lowering the T/A temperature, a third control of shifting to the parallel operation mode is performed. That is, when the SOC is equal to or larger than the second predetermined value S2 due to the traveling in the series operation mode, the series operation mode is prohibited and is shifted to the parallel operation mode. After shifting to the parallel operation mode, the T/A temperature is lowered. A state in which the SOC is decreased is indicated by a rightwardly descending arrow toward a point d in the graph diagram C of Fig. 2. It should be noted that the second predetermined value S2 can be set to a numerical value such as 70%, 80%, and 90% according to the vehicle type and the operation conditions. Similarly, in this case, the electric power generation output and the engine rotation speed are changed (see points <3> in the graph diagrams F and G of Fig. 2), which, however, is due to the shift to the parallel operation mode, and does not affect the vehicle speed and the driving torque.

Thereafter, the second control and the third control are alternately and repeatedly performed according to SOC conditions. Here, as shown in graph diagram A of Fig. 2, the T/A temperature gradually rises. This is because a rise amount of the T/A temperature during the series operation mode exceeds a lowering amount of the T/A temperature during the parallel operation mode, and thus the T/A temperature rises as a total. A state in which the T/A temperature gradually rises is indicated by a rightwardly ascending arrow toward a point e in the graph diagram A of Fig. 2.

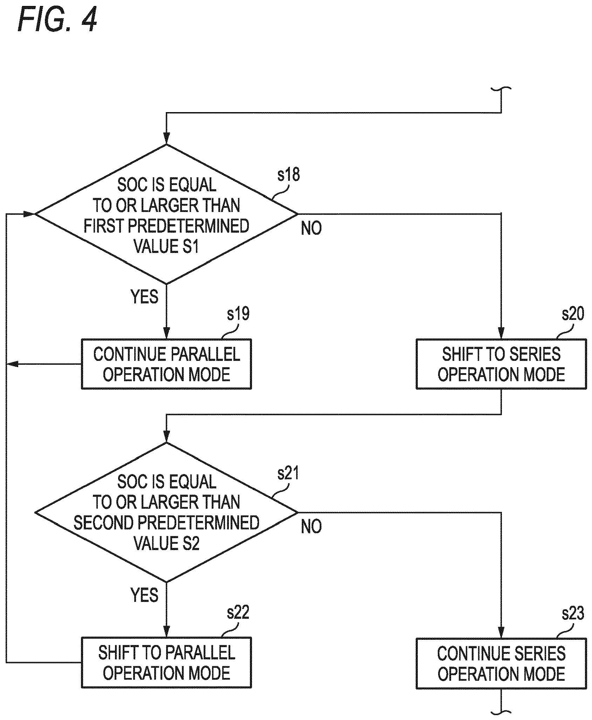

A flow of the second control and the third control is shown in Fig. 4. The SOC is determined in step s18 after shifting to the parallel operation mode in the first control. When the SOC is equal to or larger than the first predetermined value S1 (Yes in s18), the flow proceeds to step s19, the parallel operation mode is continued, and then the flow returns to step s18. When the SOC is smaller than the first predetermined value S1 (No in s18), the flow proceeds to step s20 to shift to the series operation mode. Subsequently, the SOC is determined again in step s21. When the SOC is equal to or larger than the second predetermined value S2 (Yes in s21), the flow proceeds to step s22 to shift to the parallel operation mode, and the flow returns to step s18. When the SOC is smaller than the second predetermined value S2 (No in s21), the flow proceeds to step s23 to further continue the series operation mode.

While the second control and the third control are alternately and repeatedly performed, and then, when the T/A temperature is equal to or higher than a second predetermined temperature T2 which is set to a temperature higher than the first predetermined temperature T1, a fourth control (output limiting control) of limiting a driving torque of the motor 4, an output of the engine 6, or the rotation speed of the engine 6 is performed in the series operation mode. That is, in the fourth control, for example, as indicated by symbol e in the graph A of Fig. 2, when the T/A temperature is equal to or higher than the second predetermined temperature T2 (set to T2 = 140°C in the embodiment), a control of attempting to lower the T/A temperature is performed in the series operation mode by limiting any one of the driving torque of the motor 4, the output of the engine 6, and the rotation speed of the engine 6, or a plurality of items among the items, or all of the items to be less than (a) predetermined upper limit value(s). Here, the driving torque of the motor 4 means a torque at which the electronic control unit 20 actually commands and executes a control with respect to a required torque that is input based on an accelerator operation amount of a driver. By performing the fourth control, a load on the transaxle 1 can be reduced and the T/A temperature can be lowered. It should be noted that when a control of limiting the output of the engine 6 or the rotation speed of the engine 6 is performed as the fourth control, an upper limit value and a lower limit value are set for the output or the rotation speed of the engine 6, and a restriction is applied such that the operation is continued within a range of the lower limit value or more and less than the upper limit value. When the T/A temperature falls below the first predetermined temperature T1, the fourth control is canceled to return to a normal operation mode.

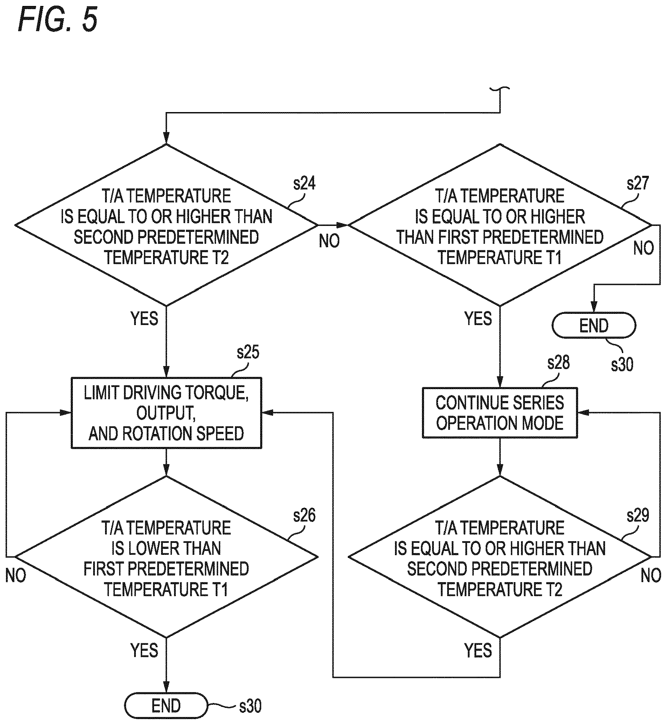

A flow of the fourth control is shown in Fig. 5. The T/A temperature is determined in step s24 while the series operation mode is continued after the third control. When the T/A temperature is equal to or higher than the second predetermined temperature T2 (Yes in s24), the flow proceeds to step s25 to perform the output limiting control. In addition, when the T/A temperature is lower than the second predetermined temperature T2 (No in s24), the flow proceeds to step s27, and further, when the T/A temperature is lower than the first predetermined temperature T1 (No in s27), the need for lowing the temperature is decreased, and thus the flow proceeds to step s30 to end the control. In addition, when the T/A temperature is equal to or higher than the first predetermined temperature T1 in step s27 (Yes in s27), the flow proceeds to step s28 to continue the series operation mode, and when the T/A temperature is equal to or higher than the second predetermined temperature T2 in step s29 (Yes in s29), the flow proceeds to step s25 to perform the output limiting control. When the T/A temperature is lower than the first predetermined temperature T1 by the output limiting control in step s25 (Yes in s26), the flow proceeds to step s30 to end the control. Still, when the T/A temperature is equal to or higher than the first predetermined temperature T1 (No in s26), the flow returns to step s25 to continue the output limiting control.

In the above embodiment, although a temperature sensor is employed as the temperature detection unit 34 to detect a temperature of a hydraulic oil or a lubricating oil in the transaxle 1, any other unit may be used as the temperature detection unit 34 as long as the unit detects a temperature in the transaxle 1. For example, a sensor or the like that detects a temperature of members such as gears in the transaxle 1 may be used.

In addition, in the above embodiment, although the vehicle 10 is an FF-type hybrid vehicle with a front wheel as the driving wheel 8, the vehicle 10 may be an FR-type vehicle with a rear wheel as the driving wheel 8, or a 4WD-type vehicle with front and rear wheels as the driving wheel 8. In addition, in the above embodiment, although the vehicle 10 is a plug-in hybrid car and has a function of supplying electric power from the secondary battery 30 to the outside, the vehicle 10 is not limited to the plug-in hybrid car, and may be a hybrid vehicle of another type.

Although various embodiments have been described above with reference to the drawings, it is needless to say that the present invention is not limited to such examples. It is apparent to those skilled in the art that various changes and modifications can be conceived within the scope of the claims, and it is also understood that the changes and modifications belong to the technical scope of the present invention. In addition, components in the above embodiment may be combined freely within a range not departing from the spirit of the present invention.

It should be noted that the present application is based on a Japanese patent application (Japanese Patent Application No. 2021-095806) filed on June 8, 2021, the contents of which are incorporated by reference in the present application.

### REFERENCE SIGNS LIST

1: transaxle
2: pump
3: clutch
4: motor (electric motor)
5: generator (electric generator)
6: engine
8: driving wheel
21: control unit
30: secondary battery

## Claims

1. A vehicle control device for a hybrid vehicle, comprising:
an engine and an electric motor;
a transaxle including a power transmission path connecting the engine and the electric motor with a driving wheel;
a temperature detection unit configured to detect a temperature of the transaxle; and
a control unit configured to switch between a series operation mode in which the electric motor is driven for traveling by electric power generated by rotation of the engine and a parallel operation mode in which the engine and the electric motor are driven for traveling, wherein
when the temperature of the transaxle is equal to or higher than a first predetermined temperature, the control unit performs a first control of giving priority to the traveling in the parallel operation mode.

2. The vehicle control device according to claim 1, further comprising:
a secondary battery configured to supply electric power to the electric motor, wherein
when a state of charge of the secondary battery decreases to be smaller than a first predetermined value due to the traveling in the parallel operation mode after the first control, the control unit performs a second control of shifting to the series operation mode.

3. The vehicle control device according to claim 2, wherein
when the state of charge of the secondary battery recovers to be equal to or larger than a second predetermined value due to the traveling in the series operation mode after the second control, the control unit performs a third control of shifting to the parallel operation mode, the second predetermined value being set to a value larger than the first predetermined value.

4. The vehicle control device according to claim 2, wherein
the hybrid vehicle is a plug-in hybrid car, and the plug-in hybrid car has a function of supplying the electric power from the secondary battery to an outside.

5. The vehicle control device according to claim 3, wherein
the hybrid vehicle is a plug-in hybrid car, and the plug-in hybrid car has a function of supplying the electric power from the secondary battery to an outside.

6. The vehicle control device according to claim 1, wherein
when the temperature of the transaxle is equal to or higher than a second predetermined temperature, the control unit performs a fourth control of limiting a driving torque, an engine output, or an engine rotation speed, the second predetermined temperature being set to a temperature higher than the first predetermined temperature.

7. The vehicle control device according to claim 2, wherein
when the temperature of the transaxle is equal to or higher than a second predetermined temperature, the control unit performs a fourth control of limiting a driving torque, an engine output, or an engine rotation speed, the second predetermined temperature being set to a temperature higher than the first predetermined temperature.

8. The vehicle control device according to claim 3, wherein
when the temperature of the transaxle is equal to or higher than a second predetermined temperature, the control unit performs a fourth control of limiting a driving torque, an engine output, or an engine rotation speed, the second predetermined temperature being set to a temperature higher than the first predetermined temperature.

9. The vehicle control device according to claim 4, wherein
when the temperature of the transaxle is equal to or higher than a second predetermined temperature, the control unit performs a fourth control of limiting a driving torque, an engine output, or an engine rotation speed, the second predetermined temperature being set to a temperature higher than the first predetermined temperature.

10. The vehicle control device according to claim 5, wherein
when the temperature of the transaxle is equal to or higher than a second predetermined temperature, the control unit performs a fourth control of limiting a driving torque, an engine output, or an engine rotation speed, the second predetermined temperature being set to a temperature higher than the first predetermined temperature.
